# EUROPÄISCHE PATENTSCHRIFT

(11) **EP 0 636 517 B1**
(45) Veröffentlichungstag und Bekanntmachung des Hinweises auf die Patenterteilung: **30.07.1997**
(21) Anmeldenummer: 94109807.1
(22) Anmeldetag: 24.06.1994
(51) Int. Cl.: B60R 13/08, B60J 5/04, G10K 11/16, B62D 25/02

(54) **Herstellverfahren für ein Doppelblech-Karosserieteil mit Dämmschicht**
Method for producing a double wall car body part with an insulating layer
Procédé de fabrication d'une pièce de carrosserie à double parois avec une couche isolante

(30) Priorität: 27.07.1993 DE 4325123
(43) Veröffentlichungstag der Anmeldung: 01.02.1995
(73) Patentinhaber: Bayerische Motoren Werke Aktiengesellschaft, 80788 München (DE)
(72) Erfinder: Ebert, Frank, Dr., D-81825 München (DE)
(74) Vertreter: Bücken, Helmut

(56) Entgegenhaltungen:
- DE-A- 4 015 169
- DE-B- 1 147 768
- GB-A- 2 113 346
- US-A- 4 479 992

## Beschreibung

Die Erfindung betrifft ein Herstellverfahren für ein zumindest bereichsweise eine Doppelblechstruktur mit dazwischenliegender Dämmschicht aufweisendes Fahrzeug-Karosserieteil, wobei das Grundblech und das Deckblech der Doppelblechstruktur unter Zwischenlage der Dämmschicht zunächst gegeneinander fixiert und anschließend gemeinsam umgeformt, insbesondere tiefgezogen werden.

Zu den wesentlichen technischen Anforderungen an eine moderne Fahrzeug-Karosserie gehört eine ausreichende Schalldämmung bei gleichzeitiger Erfüllung der Gewichts- und Steifigkeitsziele. In der Großserienfertigung werden derzeit zur Schalldämmung großflächige Bitumenmatten auf die fertiggeformten Karosserieteile in der Lackiererei aufgeschmolzen. Diese Bitumenmatten sollen die fehlende Dämmwirkung des Stahl- oder Aluminiumbleches ergänzen. Auch werden dicke, mit schweren Partikeln gefüllte Schaummatten und Gummidämmatten in die Fahrzeuge eingebracht. Ferner ist es üblich, Sicken vorzusehen, um die Steifigkeit zu erhöhen und eine tieffrequente Eigenschwingung zu reduzieren. Von Nachteil ist dieser bekannte Stand der Technik insofern, als aufgeklebte Bitumenmatten außer ihrer Dämmwirkung keinen zusätzlichen Steifigkeitsgewinn erbringen. Dieser wäre aber notwendig, um die Schwingungsamplituden bei Eigenschwingung der Blechteile gering zu halten. Desweiteren müssen die Bitumenmatten derzeit manuell eingelegt werden, was zeit- und kostenaufwendig ist. Ebenso relativ kostenintensiv und darüber hinaus schwer sind Dämmschäume und Gummimatten. Deren Montage ist ebenfalls problematisch, darüber hinaus verbrauchen derartige Matten wertvollen Bauraum. Die beschriebenen Sicken zur Steifigkeitserhöhung sind aus umformtechnischer Sicht problematisch. Auch können sie Kräfte nur in der Sickenlängsrichtung, nicht senkrecht dazu übertragen.

Neben dem eingangs geschilderten Stand der Technik sind aber auch Doppelblechstrukturen mit dazwischenliegender Dämmschicht bekannt geworden, ein Beispiel hierfür zeigt die DE-AS 1 275 885. Dieses bekannte Fahrzeug-Karosserieteil weist über seiner gesamten Fläche eine Doppelblechstruktur auf, wobei zwischen diesen Blechen eine poröse Masse als Dämpfungsschicht vorgesehen ist. Aufgrund der sich über der gesamten Fläche erstreckenden Doppelblechstruktur ergibt sich jedoch ein unerwünscht hohes Gewicht für ein derartiges Fahrzeug-Karosserieteil. Dieser Gewichtszuwachs könnte reduziert werden, wenn die Doppelblech-Struktur mit zwischenliegender Dämmschicht nur in schwingungsrelevanten Teilbereichen eines größerflächigen Fahrzeug-Karosserieteiles vorgesehen wird. Dann ist es jedoch erforderlich, Randbereiche, Flanschbereiche und Durchbrüche gegen Eindringen korrosionsfördernder Medien sicher abzudichten.

Für ein derartiges Fahrzeug-Karosserieteil mit zumindest partieller Doppelblechstruktur nach dem Oberbegriff des Anspruchs 1 ein vorteilhaftes Herstellverfahren aufzuzeigen, ist demnach Aufgabe der vorliegenden Erfindung. Zur Lösung dieser Aufgabe sind die kennzeichnenden Merkmale des ersten Patentanspruches vorgesehen. Vorteilhafte Weiterbildungen sind im Patentanspruch 2 aufgelistet, während Anspruch 3 vorteilhafte Merkmale eines nach einem erfindungsgemäßen Herstellverfahren gefertigten Fahrzeug-Karosserieteiles nennt.

Erfindungsgemäß erstreckt sich die Doppelblechstruktur und insbesondere diejenige mit zwischenliegender Dämmschicht über ausgewählte Flächenabschnitte des Fahrzeug-Karosserieteiles. Dabei soll aber weiterhin dieses gesamte Fahrzeug-Karosserieteil einem einheitlichen Umformvorgang unterworfen werden, d. h. obwohl lediglich Teilbereiche des Fahrzeug-Karosserieteiles eine Doppelblechstruktur mit zwischenliegender Dämmschicht aufweisen, wird dennoch das gesamte Karosserieteil beispielsweise tiefgezogen. Demgemäß wird zunächst auf das ebene Grundblech lediglich in ausgewählen Flächenabschnitten das geeignete Dämmschicht-Material aufgelegt. Anschließend wird hierauf das noch ebene Deckblech aufgelegt, wobei das Deckblech zwar sämtliche mit dem Dämmschicht-Material versehene Flächenabschnitte überdeckt, jedoch durchaus kleiner als das Grundblech sein kann. Das Dämmschicht-Material muß dabei zumindest im Dämmschicht-Randbereich ausreichend druckstabil sein, um im jeweiligen Dämmschicht-Flächenabschnitt das Grundblech und das Deckblech auch nach erfolgter Umformung bzw. nach dem gemeinsamen Tiefziehen voneinander beabstandet zu halten. Das Dämmschicht-Material stellt somit einen Füllkörper dar, so daß beim gemeinsamen Tiefziehen von Grundblech samt Zwischenschicht/Dämmschicht/Füllkörper und Deckblech in einem konventionellen Tiefziehwerkzeug ein Profilkörper erzeugt wird, der im Vergleich zu einem ebenen oder lediglich mit Sicken versehenen Blech gleicher Dicke deutlich größere Steifigkeitswerte besitzt. Gleichzeitig wird durch dieses Herstellungsverfahren die bei einer Fahrzeugkarosserie notwendige Schalldämpfungsschicht in die sich ergebende Sandwich-Bauweise integriert. Selbstverständlich ist es erforderlich, die Dickenunterschiede der sich hiermit ergebenden Doppelblechstruktur zwischen den Flächenbereichen mit Füllkörper und denjenigen ohne Füllkörper/Dämmschicht-Material im Tiefziehwerkzeug zu berücksichtigen und einzuarbeiten. Hiermit trägt sodann der Füllkörper bzw. die zumindest in ihrem Randbereich druckfeste Dämmschicht zur Umformung des Bleches bzw. der Bleche bei.

Es ist erforderlich, vor dem Umformen zumindest das Deckblech sowie das Grundblech gegeneinander zu fixieren. Dies kann dadurch erfolgen, daß Grundblech und Deckblech abseits der Dämmschicht auf geeignete Weise zumindest an einigen Stellen aneinander befestigt werden, beispielsweise durch Kleben oder durch Punktschweißen. Alternativ oder daneben ist es jedoch auch möglich, das Dämmschichtmaterial sowohl mit dem Grundblech als auch mit dem Deckblech zu verkleben, wodurch nicht nur das Dämmschichtmaterial als solches, sondern auch Grundblech und Deckblech zueinander fixiert werden. Ferner werden Grundblech und Deckblech zumindest in den Randbereichen der Doppelblechstruktur miteinander verklebt, um einerseits eine feste Verbindung zwischen Grundblech und Deckblech zu schaffen und andererseits auch das Eindringen von Wasser zu verhindern und somit vor Korrosion zu schützen. Dabei sollen unter den Begriff des Randbereiches nicht nur die Ränder des - wie oben erläutert - gegenüber dem Grundblech bevorzugt kleineren Deckbleches fallen, sondern auch die Ränder von nachträglich in die Doppelblechstruktur eingebrachten Durchbrüchen. Selbstverständlich sollte im Bereich dieser Durchbrüche keine Dämmschicht zwischen Grundblech und Deckblech vorhanden sein, da andernfalls die in diesem Bereich auseinanderklaffende Doppelblechstruktur nicht nur eine gewaltige Steifigkeitseinbuße erfahren würde, sondern auch äußerst korrosionsgefährdet wäre. Demzufolge müssen auch im Bereich später in die Doppelblechstruktur einzubringender Durchbrüche Grundblech und Deckblech miteinander verklebt sein.

In bevorzugter Weise erfolgt der Auftrag des für die Verklebung erforderlichen Klebemittels durch Folien oder durch Dichtschnüre, Aufwalzen oder durch Sprühfilm, alternativ mittels einer Kleberraupe oder durch Tropfen. Neben dem bereits erwähnten Punktverschweißen im Bereich der Stoßstellen von Grundblech und Deckblech, d. h. abseits der Dämmschicht, können Grundblech und Deckblech alternativ auch durch Clinchpunkte aneinander fixiert werden. Dabei können in diesen direkten Verbindungsstellen ebenso wie auch in den Bereichen, in denen Grundblech und Deckblech miteinander verklebt sind, eingeleitete Schubkräfte optimal von der Doppelblechstruktur aufgenommen werden. Etwaige Anbauteile, die an einer erfindungsgemäß gefertigten Doppelblechstruktur befestigt werden sollen, werden bevorzugt ebenfalls in diesen Stoßstellen-Bereichen von Grundblech und Deckblech angeschweißt oder in sonstiger Weise angebunden.

Es empfiehlt sich, zum Verkleben von Grundblech und Deckblech einen punktschweißfähigen Kleber einzusetzen, d. h. einen Kleber, der im unausgehärteten Zustand das Anbringen einer Punktschweißverbindung erlaubt und dementsprechend elektrisch leitfähig ist. Auch bietet sich die Verwendung sog. Hotmelt-Kleber an, die bei Raumtemperatur nicht klebrig sind, um ein Verschmutzen der Umformwerkzeuge zu vermeiden. Dieser Kleber kann nach dem Umformen örtlich partiell ausgehärtet werden, um Grundblech und Deckblech für nachfolgende Bearbeitungsvorgänge definiert aneinander zu fixieren. Diese örtliche Aushärtung sollte abseits später noch zu setzender Schweißpunkte durchgeführt werden und kann durch lokalen Wärmeeinfluß, beispielsweise mittels Laser, einer Magnetspule oder einer sonstigen fokussierten Wärmequelle erfolgen. Das endgültige Aushärten über der gesamten Klebefläche kann hingegen später erfolgen, beispielsweise während einer ohnehin erforderlichen Wärmebehandlung zum Aushärten einer auf das Karosserieteil aufgebrachten Lackschicht.

Es ist aber auch möglich, neben einem Hotmelt-Kleber beispielsweise auf Epoxidharzbasis zusätzlich einen punktschweißbaren Kontaktkleber einzusetzen, der während weiterer Bearbeitungsschritte an einer erfindungsgemäß umgeformten Doppelblechstruktur für eine exakte gegenseitige Zuordnung von Grundblech und Deckblech sorgt, der aber beispielsweise aufgrund seines Anbringortes nicht dazu geeignet ist, den Spalt zwischen Grundblech und Deckblech ausreichend genug gegen korrosionsfördernde Medien abzudichten. Ein geeignet angebrachter Hotmelt-Kleber kann somit für ausreichende Korrosionsdichtheit sorgen, während ein ebenfalls vorgesehener Kontaktkleber das Aufklaffen der Doppelblechstruktur nach der Umformung vermeiden soll. Der Hotmeltkleber sowie der Kontaktkleber können dabei in verschiedenen Kleberraupen gelegt werden, es ist aber auch möglich, ein geeignetes Klebergemisch aus Kontaktkleber und Hotmelt-Kleber aufzutragen. Dabei wird der Kontaktkleber im Umform-/Preßwerkzeug durch Nachschlagen (= hoher Druck) zusammengepreßt und bildet auch bei einer späteren Wärmebehandlung, beispielsweise der bereits erwähnten Lackaushärtung, eine Fixierung für die Hotmelt-Komponente. Selbstverständlich sollte dieses Klebergemisch für die spätere, jedoch noch vor dem Aushärten des Hotmelt-Klebers erfolgende Anbringung von Schweißpunkten geeignet sein.

Weiterhin ist es möglich, in einem Randbereich der Doppelblechstruktur eine Kleberraupe von solcher Dicke aufzubringen, daß diese Kleberraupe nach dem Umformen sowie nach dem Verbinden von Grundblech und Deckblech durch Punktschweißen oder auch Clinchen in einem Bereich zwischen der Kleberraupe sowie der Zwischenlage eine Biege-Druck-Spannung im Grundblech und/oder Deckblech hervorruft. Durch diese Kleberraupe werden somit bei nichtausgehärtetem Kleber Grundblech und Deckblech in diesem Bereich geringfügig voneinander beabstandet gehalten, wodurch insbesondere im (dünneren) Deckblech eine Biegespannung hervorgerufen wird. Beim späteren Aushärten des Klebers beginnt diese Kleberraupe zunächst zu schmelzen, wodurch sich diese Biegespannung abbauen kann und die zunächst voneinander beabstandeten Blech nahezu aufeinander zum Anliegen kommen. Dieser gewünschte Prozeß erfolgt während des Aushärtvorganges des Klebers durch die Aufweichung der Hotmelt-Kleberraupe quasi selbsttätig.

Im Anschluß an den Umformvorgang kann ferner das Deckblech bzw. Verstärkungsblech beschnitten und somit gegenüber dem Grundblech verkleinert werden. Ein Niederhalter kann dabei im Schneidebereich auf die erstarrte Kleberraupe drücken, welche die Schneidkraft des seitlich dieser Raupe angreifenden Schneidemessers aufnimmt. Analog dem bekannten Schneiden mit einem Gummikissen ergibt sich hiermit ein sog. Reißschnitt. Dabei dichtet bei einem späteren Lackiervorgang die aufschmelzende Kleberraupe den Spalt zwischen Grundblech und Deckblech ab. Dieses nachträgliche Beschneiden des ursprünglich - beispielsweise wegen eines Blechhalters - größeren Deckbleches ist somit ohne Verletzung des Grundbleches möglich. Angewendet werden kann dies beispielsweise in Bereichen von Karosseriebauteilen, in denen eine Doppelblechstruktur wegen anschließender Schweißverbindungen oder wegen einer Korrosionsgefahr unerwünscht ist.

Wie bereits erwähnt, kann es erforderlich sein, Grundblech und Deckblech nach erfolgter gemeinsamer Umformung für die nachfolgenden Bearbeitungsschritte aneinander zu fixieren, da der Kleber wegen später noch anzubringender Punktschweißverbindungen bekanntermaßen dann noch nicht ausgehärtet sein darf. Als eine (zusätzliche) Fixiermöglichkeit wurde oben bereits die Verwendung von Kontaktkleber genannt. Daneben ist es aber auch möglich, Grundblech und Deckblech durch partielle Einprägungen oder durch Erzeugen von Hinterschnittbereichen formschlüssig miteinander zu verbinden. Selbstverständlich kann bzw. sollte dies nur abseits von Zwischenlagen-Bereichen insbesondere in Randbereichen der Doppelblechstruktur erfolgen. Auch hierdurch wird das Aufklaffen des Randbereiches oder Flanschbereiches bei der Aufschmelzung des Hotmelt-Klebers verhindert.

Die Dämmschicht kann durch verschiedenartigste Materialien gebildet werden und ebenso in verschiedenartigster Weise auf das Grundblech aufgebracht werden. Beispielsweise kann hierzu eine Hartfaserplatte zum Einsatz kommen, die jedoch nicht in gleicher Weise ziehfähig ist, wie übliche Stahl- oder Leichtmetallbleche. Da andererseits jedoch diese lediglich geringen Umformungen zugängliche Dämmschicht-Platte gemeinsam mit dem Grundblech und Deckblech tiefgezogen bzw. umgeformt werden soll, kann es empfehlenswert sein, diese Platte in Bereichen stärkerer Umformung mit entsprechenden Einschnitten oder Einkerbungen zu versehen. Diese Einschnitte bzw. Einkerbungen bewirken, daß dann das Dämmschicht-Material gleichmäßig über dem Dämmschicht-Flächenabschnitt verteilt wird, wobei es für die Funktion unerheblich ist, daß das vor dem Umformen noch einen zusammenhängenden Körper, nämlich die Platte, bildende Dämmschicht-Material beim anschließenden Tiefziehvorgang in einzelne Bruchstücke oder dgl. zerrissen wird. Aufgrund der einwirkenden Ziehkräfte laßt sich mit geeigneten Dämmschicht-Materialien sowie ggf. mit den beschriebenen Einschnitten/Einkerbungenn in eine Dämmschicht-Platte eine optimale Verteilung des Dämmschicht-Materiales über dem Dämmschicht-Flächenabschnitt einstellen.

Besonders vorteilhaft ist es, wenn das Dämmschicht-Material im Hinblick auf seine physikalischen Zustandsgrößen veränderbar ist, beispielsweise aufgrund äußerer Einflüsse, seien sie thermisch oder mechanisch, oder auch zeitlich. So soll bei der Umformung des Doppelbleches dieses Material möglichst hart und druckstabil sein, um eine optimale Umformung zu gewährleisten. Nach der Umformung hingegen, d. h. im Gebrauch soll das Material weich sein, um eine hohe akustische Dämpfung zu bewirken. Initiiert werden kann diese Umwandlung beispielsweise durch thermische Zersetzung des Dämmschicht-Materials. Dabei ist es sogar möglich, einen Teil des Dämmschicht-Materials wieder auszuschmelzen, um das Gewicht der Doppelblechstruktur zu reduzieren. Das verbleibende Dämmschicht-Material kann dabei die Funktion einer Hohlraum-Konservierung übernehmen; das ausgeschmolzene Material kann ggf. recycelt werden.

Ein erfindungsgemäß gefertigtes Karosserieteil kann nach dem Umformen einer Wärmebehandlung unterworfen werden, wodurch sämtliche Klebeverbindungen aushärten. Durch eine derartige Wärmebehandlung, aber auch auf andere geeignete Weise kann weiterhin ein Aufquellprozeß in der Dämmschicht initiiert werden. Derartige Materialien, die insbesondere durch Wärmeeinwirkung aufquellen, sind bekannt und als Dämmschicht-Material durchaus geeignet. Durch das Aufquellen der Dämmschicht bzw. des eingelegten Formkörpers nach dem Umformprozeß wird die hiermit erzeugte Doppelblechstruktur quasi verspannt, was eine Festigkeitssteigerung des damit erhaltenen Profilkörpers bewirkt. Selbstverständlich kann die beschriebene Wärmebehandlung mit anderen nachfolgenden Bearbeitungsvorgängen kombiniert werden, so beispielsweise mit einer ohnehin erforderlichen Wärmebehandlung zum Aushärten einer auf das Karosserieteil aufgebrachten Lackschicht.

Diese im letzten sowie vorletzten Absatz beschriebene Zustandsänderung der Dämmschicht kann aber auch durch Zusatzstoffe hervorgerufen werden, die dem Dämmschicht-Material zwar von Anfang an zugegeben sind, jedoch erst nach einiger Zeit - und/oder alternativ durch Druckeinwirkung und somit durch den Umformvorgang initiiert - wirksam werden. Kommt als Dämmschicht-Material Bitumen zum Einsatz, so kann es sich bei diesem Zusatzstoff um Öl handeln, das bezüglich des Bitumens als Weichmacher wirkt. Dabei dringt eine Ölschicht zwischen zwei Bitumenmatten deutlich zeitverzögert in das Bitumenmaterial ein. Auch kann dieses Öl zunächst in gebundener Form - beispielsweise in einer Wachsschicht - vorliegen, wobei ein (langsamer) Zersetzungsprozeß dafür sorgt, daß dieses Öl - oder auch ein anderer geeigneter Zusatzstoff - erst nach Ablauf einer gewissen Zeit freigegeben wird.

Bevorzugt kommt als Dämmschicht-Material Bitumen zum Einsatz. Daneben kann - wie bereits erwähnt - die Dämmschicht aber auch durch eine Hartfaserplatte (Karton) oder eine Preßspanplatte gebildet werden, daneben ist der Einsatz von Kunststoff möglich. Es kann aber auch zwischen das Grundblech und das Deckblech ein Noppenblech oder ein Drahtgestrick eingelegt werden, bevorzugt in Ergänzung zu einem geeigneten, ausreichende Dämpfungswirkung aufweisenden, beispielsweise pulverförmigen oder kugelförmigen Kunststoffmaterial. Während Bitumenmatten oder Hartfaserplatten bereits von ihrer Grundstruktur ausreichend druckstabil sind, um im Dämmschicht-Flächenabschnitt das Grundblech sowie das Deckblech trotz Umformung voneinander beabstandet zu halten, kann es bei Auswahl anderer Dämmschichtmaterialien erforderlich sein, Zusatzmaßnahmen vorzusehen, um den Dämmschicht-Randbereich ausreichend druckstabil zu machen. Hierfür kann bevorzugt ein Draht, insbesondere ein 4-Kant-Draht eingelegt werden. Dieser Draht bildet dann den Rand des Dämmschichtbereiches. Daneben können in die Dämmschicht weitere Funktionsteile, wie z. B. Führungen für diverse Zusatzelemente, aber auch Kanäle oder Gewindehülsen oder dgl. eingelegt werden.

Die Dicke der Dämmschicht bzw. des Füllkörpers für eine erfindungsgemäße Doppelblechstruktur bzw. einen hiermit entstehenden Profilkörper kann an die auftretenden Belastungen angepaßt und demgemäß über dem Dämmschicht-Flächenabschnitt verschiedenartig sein. Beispielsweise entsprechend den Statikgesetzen für einen Biegebalken kann bei Krafteinleitung in den Rändern des Dämmschicht-Flächenabschnittes das Zentrum dieser Dämmschicht-Fläche dicker ausgebildet werden, als der Randbereich. Um dies fertigungstechnisch umzusetzen, kann entweder der Füllkörper, d. h. das auf das Grundblech aufgelegte Dämmschicht-Material eine dementsprechende Kontur besitzen oder es können auch mehrere Lagen eines geeigneten Dämmschicht-Materiales, beispielsweise einer Bitumenmatte, übereinander angeordnet werden, wobei die jeweiligen Flächenabschnitte der einzelnen Dämmschicht-Lagen abgestuft und größenmäßig abnehmend ausgebildet sein können.

Dies sowie weitere Vorteile der Erfindung geht auch aus den im folgenden erläuterten Prinzipskizzen hervor, die - lediglich schmematisch - bevorzugte Ausführungsbeispiele zeigen. Dabei ist in Fig. 1 ein vorbereitetes Grundblech mit abschnittsweise aufgebrachtem Dämmschicht-Material sowie aufgelegtem Deckblech dargestellt, während Fig. 2 einen Schnitt durch das fertig umgeformte Bauteil zeigt. Weitere Details sind in den Fig. 3 bis 6 dargestellt.

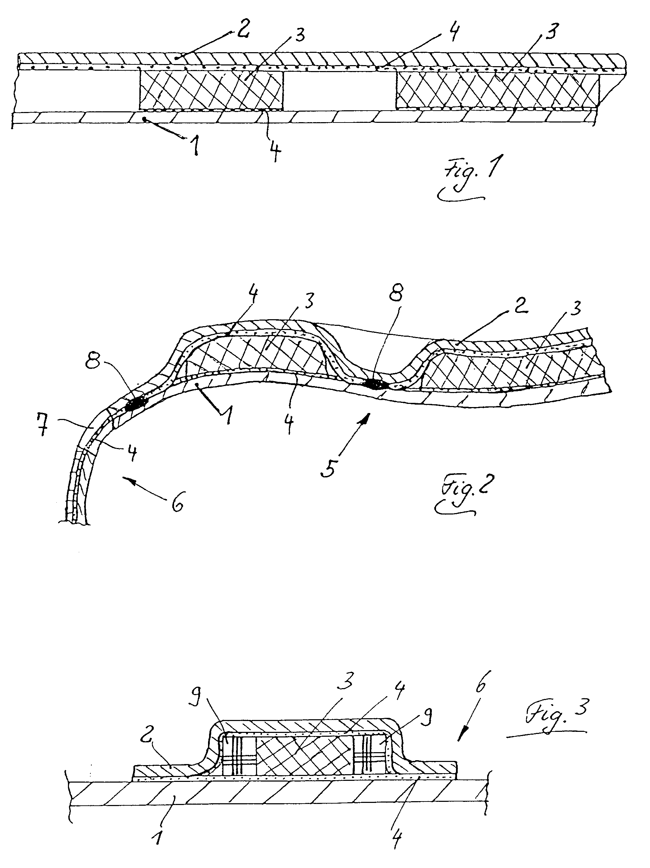

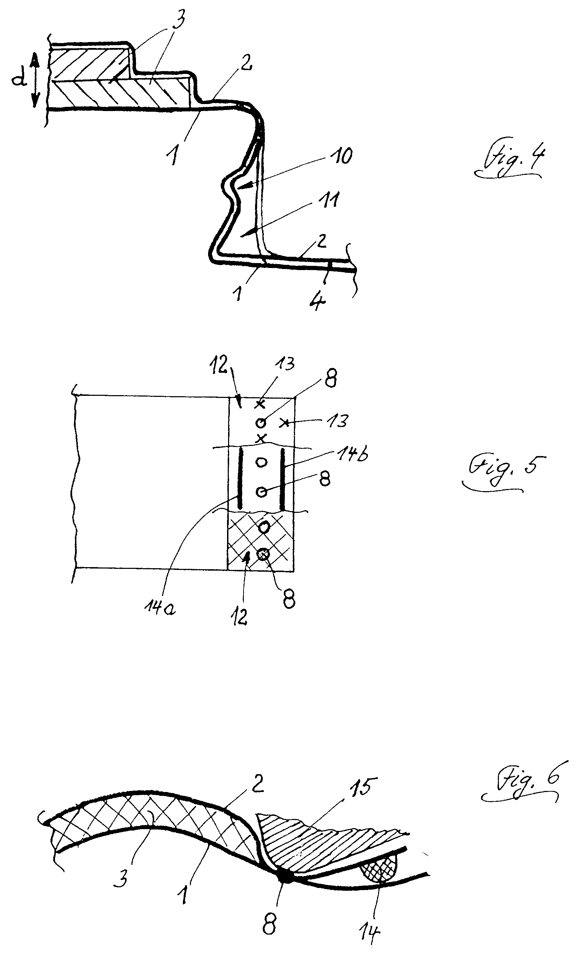

Mit der Bezugsziffer 1 ist stets das Grundblech eines zumindest bereichsweise eine Doppelblechstruktur mit dazwischenliegender Dämmschicht aufweisenden Fahrzeug-Karosserieteiles bezeichnet. Das Deckblech dieser Doppelblechstruktur trägt die Bezugsziffer 2, während die teilweise vorgesehene Dämmschicht, die quasi einen Füllkörper zwischen Grundblech 1 und Deckblech 2 darstellt, mit der Bezugsziffer 3 bezeichnet ist. Wie ersichtlich, erstreckt sich die Dämmschicht 3 lediglich über einen bzw. mehrere Flächenabschnitte des Grundbleches 1 sowie des Deckbleches 2, wobei letzteres - wie Fig. 3 zeigt - sich ebenfalls nur über einen Teilbereich des Grundbleches 1 erstrecken kann.

Jeder Dämmschicht-Flächenabschnitt 3 kann jeweils durch beispielsweise eine Bitumenmatte gebildet sein, die zunächst mit dem Grundblech 1 verklebt wird. Die entsprechende Kleberschicht ist mit der Bezugsziffer 4 bezeichnet. Anschließend wird - wie Fig. 1 zeigt - das bereits mit einer Kleberschicht 4 versehene Deckblech 2 aufgelegt.

Die gemäß Fig. 1 vorbereitete Struktur wird anschließend in einem Tiefziehwerkzeug umgeformt, wodurch sich das in Fig. 2 dargestellte, fertig umgeformte Bauteil ergibt. Wie ersichtlich, stellt die Dämmschicht 3 einen im wesentlichen druckstabilen Füllkörper dar, so daß das Deckblech 2 - wie gezeigt - verformt wird. In den Bereichen zwischen den Dämmschicht-Flächenabschnitten 3 kommt das Deckblech 2 auf dem Grundblech 1 zum Anliegen, dieser Bereich wird als Stoßstellen-Bereich 5 bezeichnet. In einem Randbereich 6, in dem ebenfalls das Grundblech 1 und das Deckblech 2 ohne Zwischenlage einer Dämmschicht 3, jedoch über eine Kleberschicht 4 miteinander verbunden direkt aufeinanderliegen, ist ein Durchbruch 7 vorgesehen. Nicht nur im eigentlichen Randbereich 6 der gesamten Doppelblechstruktur, sondern auch im Randbereich dieses Durchbruches 7 sind - wie ersichtlich - das Grundblech 1 und das Deckblech 2 ohne Zwischenlage einer Dämmschicht 3 somit miteinander verklebt. Ferner sind im Stoßstellenbereich 5 sowie im Randbereich 6 vereinzelte Schweißpunkte 8 vorgesehen, um eine optimale Festigkeit bzw. Haltbarkeit der beschriebenen, einen Profilkörper darstellenden Doppelblechstruktur zu gewährleisten.

Während bei der Ausführungsform gemäß den Fig. 1, 2 die Dämmschicht 3 selbst ausreichend druckstabil ist, um im Dämmschicht-Flächenabschnitt das Grundblech 1 sowie das Deckblech 2 trotz Umformung voneinander beabstandet zu halten, kommt bei der Ausführungsform gemäß Fig. 3 ein etwas weicheres Dämmschicht-Material zum Einsatz, dessen Randbereich einer Verstärkung bedarf. Daher sind die Ränder des Dämmschicht-Materiales 3 von einem Draht 9 umgeben, der gewährleistet, daß sich das Deckblech 2 beim Tiefziehen wie gewünscht verformt, ohne daß in diesem Tiefziehvorgang das Dämmschicht-Material 3 in unerwünschter Weise zwischen dem Deckblech 2 sowie dem Grundblech 1 verteilt wird.

Fig. 4 zeigt weitere Details einer erfindungsgemäßen Doppelblechstruktur, wobei im Sinne einer vereinfachten Darstellung die Kleberschichten nicht explizit gezeigt sind. Im Randbereich ist eine lokale Einprägung 10 derart in das Grundblech 1 und das Deckblech 2 eingebracht, daß Grundblech und Deckblech formschlüssig miteinander verbunden sind. Der gleiche Effekt wird durch einen partiellen Hinterschnitt 11 erzielt, der nach dem gemeinsamen Umformen mittels eines geeigneten Werkzeuges erzeugt wird. Diese Ausführungsform gemäß Fig. 4 zeigt weiterhin, daß die Dicke d der Dämmschicht 3 über dem Dämmschicht-Flächenabschnitt verschiedenartig sein kann. Hierzu ist das Dämmschicht-Material 3 zweilagig sowie größenmäßig abnehmend angeordnet.

Fig. 5 zeigt eine Aufsicht auf einen Flanschbereich (Randbereich) einer erfindungsgemäßen Doppelblechstruktur und dient zur Erläuterung der verschiedenen Verklebemöglichkeiten von Grundblech 1 und Deckblech 2. Dabei sollen in diesem Randbereich nach dem gemeinsamen Umformen die Schweißpunkte 8 gesetzt werden, so daß in dem mit Kleber bestrichenen Flächenstück 12 der Kleber noch nicht vollständig ausgehärtet sein darf, um die erforderliche elektrische Leitfähigkeit sicherzustellen. Dennoch sollen Grundblech und Deckblech zumindest durch eine partielle Klebeverbindung aneinander fixiert sein. Realisiert werden kann dies durch punktuelles Aushärten des Klebers in den mit der Bezugsziffer 13 bezeichneten Bereichen. Hierzu kann eine fokussierte Wärmequelle zum Einsatz kommen. Es ist aber auch möglich, abseits der Schweißpunkte 8 zwei Kleberraupen 14a, 14b vorzusehen, von denen insbesondere die innenseitige durch einen Kontaktkleber und die außenseitige durch einen Hotmelt-Kleber gebildet wird. Nach einer weiteren Variante - diese ist im unteren Drittel des Flanschbereiches gezeigt - ist das Flächenstück 12 mit einer Mischung aus einem Kontaktkleber und einem Hotmelt-Kleber bestrichen, wobei der Kontaktkleber selbstverständlich punktschweißfähig sein muß.

Fig. 6 schließlich zeigt eine im Randbereich der Doppelblechstruktur vor dem Umformen aufgebrachte Kleberraupe 14 von solcher Dicke, daß diese Kleberraupe nach dem Umformen sowie nach dem Verbinden von Grundblech 1 und Deckblech 2 durch den Schweißpunkt 8 eine Biege-Druck-Spannung im Deckblech 2 hervorruft. Dies kann durch eine entsprechende Form des Umformwerkzeuges 15 erfolgen. Beim späteren Aufschmelzen (und Aushärten) der Kleberraupe 14 wird diese durch das Deckblech 2 in die Breite gedrückt und dichtet somit den Rand gut ab. Dieser Effekt stellt sich aufgrund der vorher in das Deckblech 2 eingebrachten Spannung selbsttätig ein.

Vorgesehen werden kann eine erfindungsgemäße Doppelblechstruktur mit dazwischenliegender Dämmschicht 3 bevorzugt in relativ gering verformten Karosseriebereichen. Wie auch Fig. 2 zeigt, ist in dem linksseitigen Bereich mit relativ großer Verformung keine Dämmschicht 3 vorgesehen. Dabei strahlen die positiven Wirkungen der Dämmschicht 3 selbstverständlich auf das gesamte Karosserieteil aus. Neben einer starken Erhöhung der Bauteil-Steifigkeit ergibt sich nämlich ein wesentlich verbessertes Akustikverhalten. Neben einer Gewichts- und Kostenreduzierung - u. a. auch aufgrund eines vereinfachten Herstellverfahrens - ist als weiterer Vorteil die Möglichkeit zu nennen, daß auch in eine laufende Serie nachträglich und schnell Verstärkungs- und Schalldämmaßnahmen eingebracht werden können. Das Dämpfungsverhalten läßt sich durch Anpassung der Dämmschicht 3 in Form, Größe, Lage, Konsistenz und Verbund (beispielsweise durch Lochung) gezielt steuern. In Summe ergibt sich somit eine Reduzierung der Blechstärke insbesondere an großflächigen Teilen, wobei an Krafteinleitungspunkten eine einfache örtliche Verstärkung realisiert werden kann. Es werden optimale Ergebnisse im Hinblick auf die Schwingungs- bzw. Schalldämpfung erzielt, wobei deutlich weniger Bauraum als bei Verwendung von beispielsweise Schaummatten benötigt wird. Auch besitzt eine erfindungsgemäße Doppelblechstruktur eine höhere Steifigkeit als übliche Bleche mit Querversickung. Dabei sind selbstverständlich eine Vielzahl von Abwandlungen von den beschriebenen Ausführungsbeispielen möglich, ohne den Inhalt der Patentansprüche zu verlassen.

## Patentansprüche

1. Herstellverfahren für ein zumindest bereichsweise eine Doppelblechstruktur mit dazwischenliegender Dämmschicht aufweisendes Fahrzeug-Karosserieteil, wobei das Grundblech (1) und das Deckblech (2) der Doppelblechstruktur unter Zwischenlage der Dämmschicht (3) zunächst gegeneinander fixiert und anschließend gemeinsam umgeformt, insbesondere tiefgezogen werden, gekennzeichnet durch folgende Merkmale:
- lediglich auf ausgewählte Flächenabschnitte des ebenen Grundbleches (1) wird ein geeignetes Dämmschicht-Material (3) und hierauf das sich über einen größeren Flächenabschnitt erstreckende ebene Deckblech (2) aufgelegt, wobei das die Dämmschicht (3) bildende Material zumindest im Dämmschicht-Randbereich ausreichend druckstabil ist, um im Dämmschicht-Flächenabschnitt Grundblech (1) und Deckblech (2) trotz Umformung voneinander beanstandet zu halten
- das Dämmschicht-Material (3) wird mit Grundblech (1) und Deckblech (2) verklebt und/oder abseits der Dämmschicht (3) werden Grundblech (1) und Deckblech (2) vor dem gemeinsamen Umformen zumindest stellenweise aneinander fixiert
- zumindest in Randbereichen (6) der Doppelblechstruktur werden Grundblech (1) und Deckblech (2) miteinander verklebt.

2. Herstellverfahren nach Anspruch 1,
gekennzeichnet durch zumindest eines der folgenden Merkmale:
- der Auftrag des für die Verklebung erforderlichen Klebemittels erfolgt durch Folie oder Dichtschnur, durch Aufwalzen/Rollen oder Sprühfilm oder Kleberraupe oder Tropfen
- zum Verkleben von Grundblech (1) und Deckblech (2) wird ein punktschweißbarer Kleber, insbesondere ein Hotmelt-Kleber eingesetzt, der durch örtlich gezielten Wärmeeinfluß bereichsweise oder punktweise (13) abseits später zu setzender Schweißpunkte (8) ausgehärtet wird
- zum Verkleben von Grundblech (1) und Deckblech (2) kommt neben einem Hotmelt-Kleber ein Kontaktkleber zum Einsatz
- einige der Stoßstellen (5, 6) von Grundblech (1) und Deckblech (2) werden punktverschweißt
- eine lediglich geringen Umformungen zugängliche Dämmschicht-Platte wird in Bereichen starker Umformungen mit Einschnitten oder Einkerbungen versehen
- in einem Randbereich der Doppelblechstruktur wird vor dem gemeinsamen Umformen eine Kleberraupe (14) von solcher Dicke aufgebracht, daß diese Kleberraupe (14) nach dem Umformen sowie nach dem Verbinden von Grundblech (1) und Deckblech (2) durch Punktschweißen (Schweißpunkt 8) oder Clinchen in einem Bereich zwischen Kleberraupe (14) und Zwischenlage (3) eine Biege-Druck-Spannung im Grundblech (1) und/oder Deckblech (2) hervorruft.
- anschließend an das Umformen wird nur das Deckblech (2) seitlich einer Kleberraupe (14) beschnitten, wobei ein Niederhalter im Bereich der Kleberraupe (14) angreift.
- in Randbereichen (6) der Doppelblechstruktur werden Grundblech (1) und Deckblech (2) durch lokale Einprägungen (10) oder durch Erzeugen von Hinterschnittbereichen (11) formschlüssig miteinander verbunden.
- nach erfolgter Umformung wird in der Dämmschicht (3) ein Aufquellprozeß initiiert und/oder das Dämmschicht-Material erweicht
- das (vollständige) Aushärten des Klebers und/oder der Aufquellprozeß erfolgt durch eine nach dem Umformen stattfindende Wärmebehandlung, beispielsweise im Rahmen einer Lackierung des Karosserieteiles
- Anbauteile werden in einem Stoßstellen-Bereich (5) von Grundblech (1) und Deckblech (2) angeschweißt

3. Fahrzeug-Karosserieteil, hergestellt nach dem Verfahren gemäß Anspruch 1 oder 2 und gekennzeichnet durch zumindest eines der folgenden Merkmale:
- die Dämmschicht (3) besteht aus Bitumen oder Kunststoff oder Pappkarton oder wird durch eine Hartfaserplatte oder Preßspanplatte gebildet oder weist ein Noppenblech oder ein Drahtgestrick auf
- den Rand des Dämmschichtbereiches bildet ein eingelegter Draht (9), insbesondere 4-Kant-Draht
- in die Dämmschicht sind Funktionsteile, wie Führungen, Kanäle oder Gewindehülsen oder dgl. eingelegt
- die Dämmschichtdicke (d) ist über dem Dämmschicht-Flächenabschnitt verschiedenartig und an die auftretenden Belastungen angepaßt
- die Dämmschicht (3) ist ggf. größenmäßig abgestuft mehrlagig.

## Claims

1. A method of producing a vehicle body part which over at least some areas has a double wall structure with an intermediate insulating-layer, the base wall or sheet (1) and the cover sheet (2) of the double wall structure being initially secured together with interposition of the insulating-layer (3) and then jointly shaped, especially deep-drawn, characterised by the following features:
- a suitable insulating-layer material (3) is placed only on selected areas of the flat base sheet (1), followed by a flat cover sheet (2) which extends over a greater area, wherein the material forming the insulating-layer (3), at least in the edge region thereof, is sufficiently pressure-resistant to hold the base sheet (1) apart from the cover sheet (2) in the insulating-layer area, in spite of the shaping process,
- the insulating-layer material (3) is stuck to the base sheet (1) and the cover sheet (2), and/or the base sheet (1) and the cover sheet (2), before being jointly shaped, are secured to one another at least at places, at a distance from the insulating-layer (3), and
- the base sheet (1) and the cover sheet (2) are stuck together at least at edge regions (6) of the double-wall structure.

2. A method according to claim 1,
characterised by at least one of the following features:
- the adhesive required for sticking is applied in the form of a sheet or sealing cord or rolling or spray film or adhesive bead or drops,
- the base sheet (1) is stuck to the cover sheet (2) by a spot-weldable adhesive, especially a hot-melt adhesive, which is set by controlled local heating over certain areas or spots (13) at a distance from the places where weld points (8) are subsequently made,
- the base sheet (1) and the cover sheet (2) are stuck by a contact adhesive in addition to a hot-melt adhesive,
- some of the joints (5, 6) between the base sheet (1) and the cover sheet (2) are spot-welded,
- an only slightly shapable insulating-layer board is cut or notched at the places where shaping is extensive,
- before joint shaping, an adhesive bead (14) is applied in an edge region of the double-wall structure and has a thickness such that after the base sheet (1) and the cover sheet (2) have been shaped or joined by spot welding (weld 8) or clinching, the adhesive bead (14) exerts a bending and compressive stress in the base sheet (1) and/or the cover sheet (2) in a region between the adhesive bead (14) and the intermediate layer (3),
- after shaping, only the cover plate (2) is cut at the side of an adhesive bead (14), a clamp engaging in the region of the bead (14),
- at edge regions (6) of the double-wall structure, the base sheet (1) and the cover sheet (2) are joined positively by local indentation (10) or by production of undercut regions (11),
- after shaping, a swelling process is initiated in the insulating-layer (3) and/or the insulating-layer material is softened,
- (complete) setting of the adhesive and/or the swelling process is brought about by heat treatment after shaping, e.g. when the body part is being lacquered, and
- attached parts are attached by welding at a joint (5) between the base sheet (1) and the cover sheet (2).

3. A vehicle body part made by the method according to claim 1 or claim 2 and characterised by at least one of the following features:
- the insulating-layer (3) is of bitumen or plastics material or cardboard or is in the form of hardboard or pressboard or comprises a knobbed metal sheet or a knitted wire fabric,
- the edge of the insulating-layer region is formed by an inserted wire (9), especially a square-section wire,
- functional parts such as guides, ducts, threaded sleeves or the like are inserted in the insulating-layer,
- the thickness (d) of the insulating-layer varies over the area thereof and is adapted to the loads which occur, and
- the insulating-layer (3) is in a number of thicknesses, optionally graduated in size.

## Revendications

1. Procédé de fabrication d'une pièce de carrosserie de véhicule présentant au moins par zone, une structure en double paroi avec une couche d'isolation dans l'intervalle, la tôle de base (1) et la tôle de couverture (2) de cette structure en double paroi étant tout d'abord fixées l'une à l'autre avec interposition de la couche d'isolation (3) puis mises en forme ensemble, notamment par un emboutissage profond,
caractérisé par les moyens suivants :
- on applique une matière formant couche d'isolation (3), appropriée uniquement sur des segments de surface choisis de la tôle de base (1), plane et sur celle-ci, une tôle de couverture (2), plane, s'étendant sur un segment de surface plus grand, la matière constituant la couche d'isolation (3) étant suffisamment solide à la compression au moins dans la zone du bord de la couche d'isolation, pour que dans le segment de surface de la couche d'isolation, la tôle de base (1) et la tôle de couverture (2) restent écartées malgré la déformation,
- la matière de la couche d'isolation (3) est collée à la tôle de base (1) et à la tôle de couverture (2) et/ou à côté de la couche d'isolation (3) on fixe la tôle de base (1) et la tôle de couverture (2), l'une à l'autre, au moins par endroits avant la déformation commune,
- au moins dans les zones de bord (3) de la structure en double paroi on colle entre elles la tôle de base (1) et la tôle de couverture (2).

2. Procédé de fabrication selon la revendication 1,
caractérisé par au moins une des caractéristiques suivantes :
- l'application de la colle nécessaire au collage se fait à l'aide d'une feuille ou d'un cordon d'étanchéité, par application par rouleau/galet, ou sous la forme d'un film pulvérisé ou d'un cordon de colle ou de gouttes,
- pour coller la tôle de base (1) et la tôle de couverture (2) on utilise une colle susceptible d'être soudées par points notamment une colle hotmelt, durcie par une action de chaleur locale, dirigée, par zone ou par points (13), en dehors des points de soudure (8) qui seront réalisés ultérieurement,
- pour coller la tôle de base (1) et la tôle de couverture (2) on utilise en plus de la colle hotmelt, une colle par contact,
- on effectue une soudure par points, de quelques points de jonction (5, 6) entre la tôle de base (1) et la tôle de couverture (2),
- uniquement une plaque de couche d'isolation pour les faibles déformations, est munie d'entailles ou d'encoches dans les zones correspondant aux fortes déformations,
- dans une zone marginale de la structure en double paroi, avant la déformation commune, on applique un cordon de colle (14) d'une épaisseur telle que ce cordon (14), après déformation et après que la tôle de base (1) et la tôle de couverture soient soudées par points (point de soudure (8)) ou par pincements dans une zone entre le cordon de colle (14) et la couche intermédiaire (3), on engendre une contrainte de flexion-compression dans la tôle de base (1) et la tôle de couverture (2),
- après la mise en forme on découpe seulement la tôle de couverture (2) à côté d'un cordon de colle (14), un organe d'enfoncement étant appliqué au niveau du cordon de colle (14),
- dans les zones de bord (6) de la structure en double paroi on relie la tôle de base (1) et la tôle de couverture (2) par des déformation locales ou en réalisant des zones à contre-dépouille (11) pour une liaison par la forme,
- une fois la déformation effectuée, on initialise dans la couche d'isolation (3), une opération de gonflement et/ou on ramollie la matière de la couche d'isolation,
- la prise (complète) de la colle et/ou l'opération de gonflement se fait par un traitement thermique effectué après la mise en forme, par exemple lorsqu'on applique la peinture à la pièce de carrosserie,
- les pièces de montage sont soudées dans une zone de points de jonction (5) entre la tôle de base (1) et la tôle de couverture (2).

3. Pièce de carrosserie fabriquée selon le procédé de l'une quelconque des revendications 1 ou 2,
caractérisée par au moins l'une des caractéristiques suivantes :
- la couche d'isolation (3) est en bitume ou en matière plastique ou en carton ou elle est formée par une plaque de fibres dures ou une plaque d'aggloméré et elle comporte une tôle à bossages ou à treillis de fils,
- le bord de la zone de la couche d'isolation est formé par un fil (9), inséré notamment un fil à quatre arêtes,
- la couche d'isolation contient des pièces fonctionnelles telles que des moyens de guidages, des canaux, des manchons filetés ou des moyens analogues,
- l'épaisseur de la couche d'isolation (d) est variable sur tout le segment de surface de la couche d'isolation et est adaptée aux contraintes locales,
- la couche d'isolation (3) est le cas échéant à plusieurs couches étagées grossièrement.
